# EUROPEAN PATENT APPLICATION

(11) **EP 4 475 363 A1**
(43) Date of publication of application: **11.12.2024**
(21) Application number: 23382567.8
(22) Date of filing: 08.06.2023
(51) Int. Cl.: H02G 3/08, H02G 3/10, H02G 3/12, H02G 3/14

(54) **FRAME FOR THE FIXING OF ELECTRICAL MECHANISMS AND THE LIKE**

(71) Applicant: Schneider Electric España, S.A., 08019 Barcelona (ES)
(72) Inventor: GONZÁLEZ IRIBAS, Aitor, 08019 Barcelona (ES)
(74) Representative: Plasseraud IP

(57) **Abstract**

The invention relates to a frame for the fixing of electrical mechanisms and the like, comprising a body (9) with an opening (12) intended for housing the electrical mechanism delimiting an inner perimeter edge (13), the frame incorporating fixing flats (6) provided with holes (5) for the passage of set screws (4) which are inserted into holes (7) of an installation box (3), wherein at least one of the fixing flats (6) is integrally attached to the body (9) by flexible means (10), allowing a forced deformation to change the distancing position of said fixing flat (6) with respect to the body (9), with a movement of the flat (6) perpendicular to the contiguous inner perimeter edge (13).

## Description

### Technical Field

The present invention relates to mechanisms for electrical installations and the like, the fixing thereof when assembling the installation is performed by means of a frame which is secured by screwing on an installation box, proposing for said function a fixing frame made with characteristics that allow solving, in a satisfactory manner, defects that often occur for securing on installation boxes.

### State of the Art

Mechanisms for electrical installations and the like, such as switches, socket outlets, etc., are generally arranged on a fixing frame to be secured on an installation box, said securing often being performed by means of screwing the frame on the installation box, for which the frame is provided with holes for the passage of screws that are inserted by way of threading into corresponding holes of the box, such that the holes of the frame and the holes of the box must be in a facing arrangement coinciding with each other perfectly so that securing assembly can be carried out correctly.

However, due to defects that often occur when placing the installation boxes in the locations of placement, such as due to the deformation or the poor positioning of the boxes upon placing them in the location of assembly, the fixing of the mechanisms of application tends to present difficulties due to the holes for the set screws between the frame of the mechanisms and the installation box not being in a proper facing arrangement coinciding with each other, or to the existence of a certain inclination derived from the placement opening of the installation box, complicating the assembly of the installations.

To solve said problem, there are solutions, such as the one described in document FR3076104, which proposes a frame for the fixing of mechanisms for an installation, in which there are arranged flats independent of the framework of the frame which incorporate holes for the passage of the set screw, said flats being arranged in a moving assembly by means of a sliding coupling, thereby allowing the position with respect to the body of the frame to be changed, such that if the fixing frame and the installation box are not in a proper facing arrangement coinciding with each other, the facing arrangement of the holes of the frame and the holes of the box can be adjusted by means of moving the fixing flats of the frame for the insertion of the set screws, or the distance of the flats with respect to framework of the frame can be changed to align said frame, thereby facilitating assembly.

However, with said solution, the movable fixing flats of the frame are elements independent of the body of the frame which are attached to said body of the frame by means of an assembly coupling, which makes it more difficult to manufacture the frames, as they require manufacturing a larger number of independent parts and an assembly between the independent parts that may be complicated and may have misalignments and clearances that cause a malfunction. Furthermore, since they are independent elements, they may come out of their movement guide and be misplaced, or the coupling thereof may break and cause an incorrect installation.

Therefore, there is a clear need to develop a practical solution which allows correcting deviations in the facing arrangement between the frame for fixing the mechanisms and the installation box, in order to properly insert the set screws, leaving the mechanisms and the aesthetic frame correctly aligned, without this complicating the constructive embodiment of the elements and the functionality of the assembly for fixing the elements in the installations of application.

### Object of the Invention

The present invention proposes a frame for the fixing of electrical mechanisms and the like on an installation box, with said frame having been developed according to a structural solution which imparts advantageous characteristics, both for the constructive embodiment and for the functional performance of fixing the frame in the installations of application.

To fulfill this objective and solve the technical problems described up until now, in addition to imparting additional advantages which can be derived below, the present invention relates to a frame for the fixing of electrical mechanisms and the like, comprising a body with an opening intended for housing the electrical mechanism delimiting an inner perimeter edge, the frame incorporating fixing flats provided with holes for the passage of set screws which are inserted into holes of an installation box, wherein at least one of the fixing flats is integrally attached to the body by flexible means, allowing a forced deformation to change the distancing position of said fixing flat with respect to the body, with a movement of the flat perpendicular to the contiguous inner perimeter edge.

A frame with a single flat integrally attached in a movable manner would be sufficient to overcome the deformation defects of a box or the distancing between boxes, however, the frame will preferably have two movable flats, such that the movement margin will be greater in order to overcome the defects of the box. Even more preferably, the frame will comprise four flats providing greater versatility for boxes with different distribution of holes for screwing the frame.

The flats will therefore be attached to the inner perimeter edge of the opening of the body of the frame, providing flexibility of adjustment.

In this way, a frame formed by a single constructive element is obtained, facilitating manufacture, and since there are no independent elements, construction assemblies which slow down the formation of the frame and may present misalignments or clearances do not have to be performed.

According to a feature of the invention, the frame comprises a grooving in the body on both sides of the movable fixing flat.

As a result of this configuration, the flat is allowed to move without brushing against the body, facilitating the adjustment of the existing clearances.

According to another feature of the invention, the flexible means for attaching the flat to the body are in the form of a U-shaped hinge. This attachment by means of flexible hinges allows changing the separating distance of each fixing flat with respect to the body of the frame, facilitating the screwed fixing of the frame on the installation box in the assembly of application, since if the holes of the frame and the holes of the box are not in a facing arrangement coinciding with each other to insert the set screws, the position of any of the fixing flats can be changed by means of the flexible hinges to cause the holes of the frame and the holes of the box to properly coincide with each other, thereby facilitating the suitable insertion of the set screws, with the clearance between the two flexible hinges involved in the screwing operation being regulated.

According to another aspect of the invention, since the fixing flat has a rectangular geometry, the outer corners thereof have a rounded configuration.

This configuration prevents cuts from the sharp corner of the flat and allows an improved movement of the flat, preventing obstructions if the flat encounters irregularities on the wall during the movement thereof.

Based on the foregoing, the proposed frame has very advantageous characteristics for screwed fixing when being assembled on installation boxes, acquiring preferred character with respect to conventional frames for said function.

### Description of the Figures

Drawings illustrating a practical embodiment are attached to better understand the invention.
Figure 1 shows an exploded perspective view of the assembly of a mechanism with respect to an installation box, by means of the frame object of the invention.
Figure 2 is a front view of the frame object of the invention, the fixing flats being seen attached to the body of the frame by means of flexible hinges.
Figure 3 is a cross-section view of the frame.
Figure 4 is a cross-section view of the assembly for installing a mechanism by means of the frame of the invention, with the fixing flats being seen in a normal position.
Figure 5 is a view like the one of Figure 4 with the fixing flats in a forced separation position with respect to the body of the frame.

### Detailed Description of the Invention

In view of the mentioned figures and according to the adopted numbering, a preferred embodiment of the invention can be seen therein, said embodiment comprising the parts and elements indicated and described in detail below.

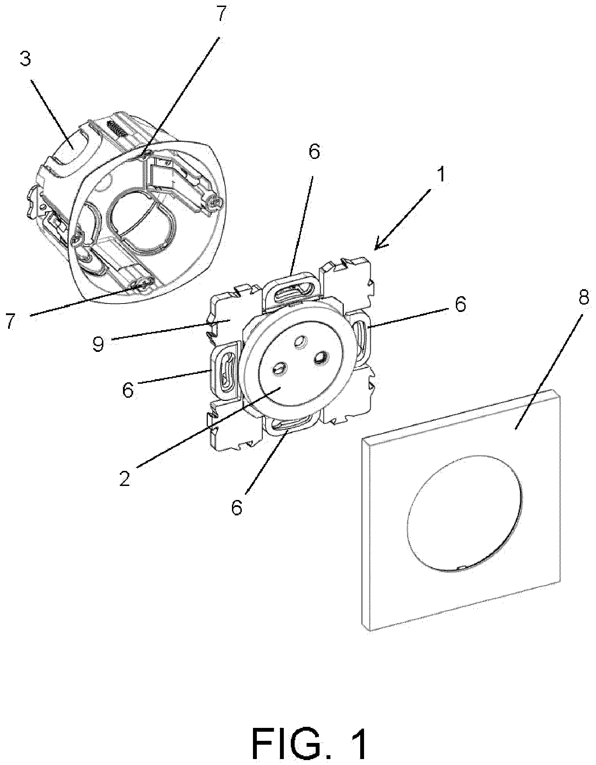

Figure 1 shows a frame (1) intended for securing electrical mechanisms (2) or the like on an installation box (3), with the securing being performed by means of set screws (4) that are inserted through holes (5) provided in fixing flats (6) incorporated in the frame (1), for threading into corresponding holes (7) of the installation box (3) fixed to the wall, the assembly of the installation being covered with an aesthetic framework (8).

According to the invention, the fixing flats (6) are attached to the inner edge (13) of the opening (12) of the body (9) of the frame (1) by flexible means (10), determining an assembly in which the body (9) of the frame (1) and the fixing flats (6) form a single part, which facilitates manufacture, since there are no independent elements that must be manufactured separately, nor is there a need to assemble the independent elements in association with one another.

The assembly of flats (6) and body (9) will be made of the same material.

However, with this embodiment, the frame (1) is adaptable to cause the holes (5) of the fixing flats (6) and the holes (7) of the installation box (3) to be in a suitable facing arrangement coinciding with each other, for the purpose of facilitating the insertion of the set screws (4) in the event that it undergoes deformation or is poorly placed upon placing the installation box (3) in its location of assembly, or in the event that there is a misalignment during the installation of multiple boxes.

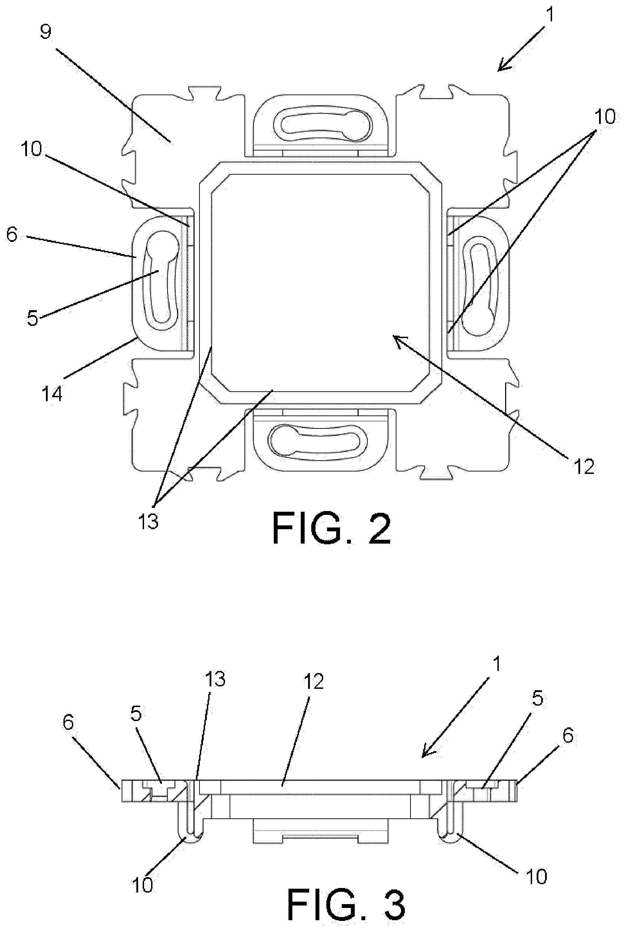

To that end, the distancing position of the fixing flats (6) with respect to the body (9) of the frame (1) can be changed by means of forced deformation of the corresponding flexible means (10), if necessary. As can be seen in Figure 3, said flexible means (10) are preferably in the form of a flexible U-shaped hinge which allows a movement of the flats (6) perpendicular to the inner edge (13) of the body (9). Said flexible hinge can be continuous along the attachment edge of the flat (6) or be in the form of two U-shaped legs as can be seen in Figure 2.

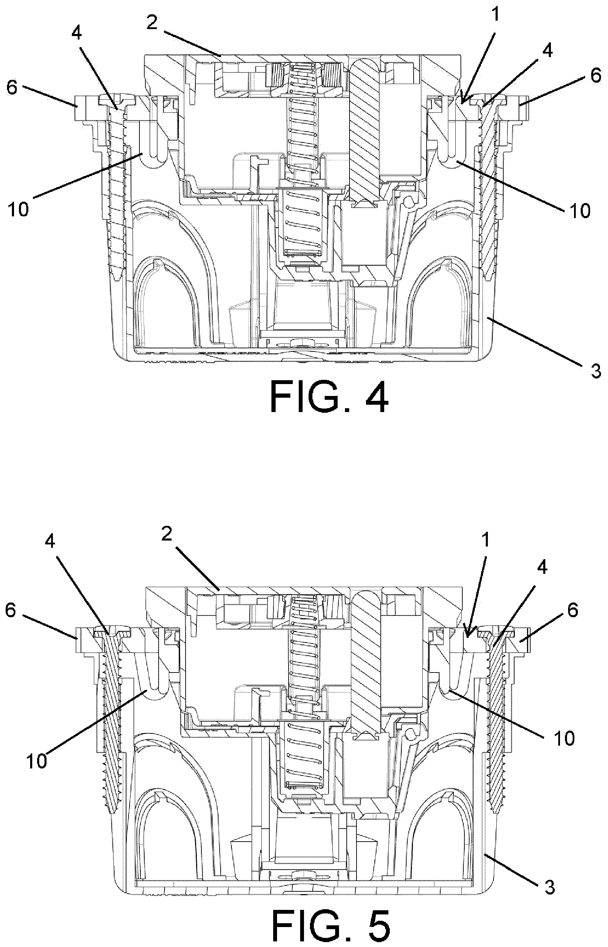

Figure 4 shows a frame (1) in the assembly of which it was not necessary to move the flats (6) in order for the holes (5) of the flats (6) and the holes (7) of the installation box (3) to coincide with each other correctly. However, how the flexible means (10) have been forced to cause the holes (5) of the fixing flats (6) and the holes (7) of the installation box (3) to coincide with each other properly for inserting the set screws (4) can be seen in Figure 5, increasing the clearance or movement margin of the flexible U-shaped hinge, such that the assembly of the installation is facilitated.

Additionally, as can be seen in Figure 2, it is intended for the flats (6) to have a rounded configuration (14). This rounded configuration would not be possible in the mentioned state of the art due to coincidence with the movement guiding edge.

## Claims

1. A frame for the fixing of electrical mechanisms and the like, comprising a body (9) with an opening (12) intended for housing the electrical mechanism delimiting an inner perimeter edge (13), the frame incorporating fixing flats (6) provided with holes (5) for the passage of set screws (4) which are inserted into holes (7) of an installation box (3), **characterized in that** at least one of the fixing flats (6) is integrally attached to the body (9) by flexible means (10), allowing a forced deformation to change the distancing position of said fixing flat (6) with respect to the body (9), with a movement of the flat (6) perpendicular to the contiguous inner perimeter edge (13).

2. The frame according to claim 1, comprising a grooving (11) in the body (9) on both sides of the fixing flat (6).

3. The frame according to any one of the preceding claims, wherein the flexible means for attaching the flat (6) to the body (9) are in the form of a U-shaped hinge.

4. The frame according to any one of the preceding claims, wherein the outer corners of the flat (6) have a rounded configuration (14).

## Amended claims

### Amended claims in accordance with Rule 137(2) EPC.

1. A frame for the fixing of electrical mechanisms and the like, comprising a body (9) with an opening (12) intended for housing the electrical mechanism delimiting an inner perimeter edge (13), the frame incorporating fixing flats (6) provided with holes (5) for the passage of set screws (4) which are inserted into holes (7) of an installation box (3), **characterized in that** at least one of the fixing flats (6) is integrally attached to the body (9) by flexible means (10), allowing a forced deformation to change the distancing position of said fixing flat (6) with respect to the body (9), with a movement of the flat (6) perpendicular to the contiguous inner perimeter edge (13).

2. The frame according to claim 1, comprising a grooving in the body (9) on both sides of the fixing flat (6).

3. The frame according to any one of the preceding claims, wherein the flexible means for attaching the flat (6) to the body (9) are in the form of a U-shaped hinge.

4. The frame according to any one of the preceding claims, wherein the outer corners of the flat (6) have a rounded configuration (14).
